# EUROPEAN PATENT APPLICATION

(11) **EP 1 768 398 A1**
(43) Date of publication of application: **28.03.2007**
(21) Application number: 05020946.9
(22) Date of filing: 26.09.2005
(51) Int. Cl.: H04N 5/74, G06F 3/14, G09G 3/00

(54) **Projector having built-in universal serial bus interface**

(71) Applicant: TOPSEED TECHNOLOGY CORP., Chung Ho City, Taipei Hsien, Taiwan 235 (TW)
(72) Inventor: Chen, Shoei-Lai c/o Topseed Technology Corp., Chung Ho City Taipei Hsien Taiwan 235 (CN)
(74) Representative: TER MEER - STEINMEISTER & PARTNER GbR

(57) **Abstract**

A projector having a built-in portable universal serial bus on the go (USB OTG), includes at least one built-in USB OTG chip and one USB OTG connection port, a display unit mounted to the projection device, and a portable memory medium having one end installed with a USB connection interface corresponding to the USB OTG connection port. Therefore, the projection device is operative to perform brief projection directly without the connection to a main control computer system; or alternatively, to perform transmission of digital file, information for a main control terminal, MP3 transmission and reception, storage access control, and to play programs for MP3 and digital audio/video programs directly.

## Description

### BACKGROUND OF THE INVENTION

### Field of Invention

The present invention relates in general to a projector having a built-in portable universal serial bus on the go (USB OTG), and more particular, to a convenient and low-cost projector equipped with a built-in display unit, a USB OTG connection port, and a memory medium operative to serve as a main controller for direct and real-time access of digital and backup data, and transmission and sharing of MP3 without connecting a main control computer system, so as to perform projection of briefing directly or play MP3 or audio/video programs

### Related Art

The conventional projector is mainly a terminal device for displaying images by projection without any self-control operation. In other words, the operation and the image file to be projected, data to be accessed and the control of projection of the conventional projector are controlled by a main control system connected thereto. That is, the projector has to connect a computer or portable computer serving as a main controller via connection interface such as USB interface or RS232 interface, so as to access and display projection files and briefing files. Without the connection to the main controller, the image file or data signal cannot be acquired to perform projection. This ultimately limits the applicability of the projector. That is, the projector cannot be used without a personal computer; and consequently, adversely affects the portability and cost for using the projector.

### SUMMARY OF THE INVENTION

A projector which incorporates a built-in display unit and a connection port having USB OTG functions is provided. By connecting a memory medium, the projector is operative to provide data access, such that real-time digital data access, backup, MP3 transmission and sharing can be performed without the requirement of connecting to a main control computer system. Consequently, the projector is operative to perform operation of briefing projection or audio/video play for MP3 more conveniently and less costly.

Accordingly, a projector having a built-in portable universal serial bus on the go (USB OTG) of the present invention, includes at least one built-in USB OTG chip and one USB OTG connection port, a display unit mounted to the projection device, and a portable memory medium having one end installed with a USB connection interface corresponding to the USB OTG connection port.

### BRIEF DESCRIPTION OF THE DRAWINGS

The present invention will become more fully understood from the detailed description given hereinbelow illustration only, and thus are not limitative of the present invention, and wherein:
FIG. 1 is an exploded view of an embodiment of a projector comprising a built-in USB OTG;
FIG. 2 shows the assembly of the projector as shown in Figure 1;
FIG. 3 shows an exploded view of another embodiment of projector;
FIG. 4 shows the assembly of the projector as shown in Figure 3;
FIG. 5 shows the operation process of the projector; and
FIG. 6 shows another operation process of the projector.

### DETAILED DESCRIPTION OF THE INVENTION

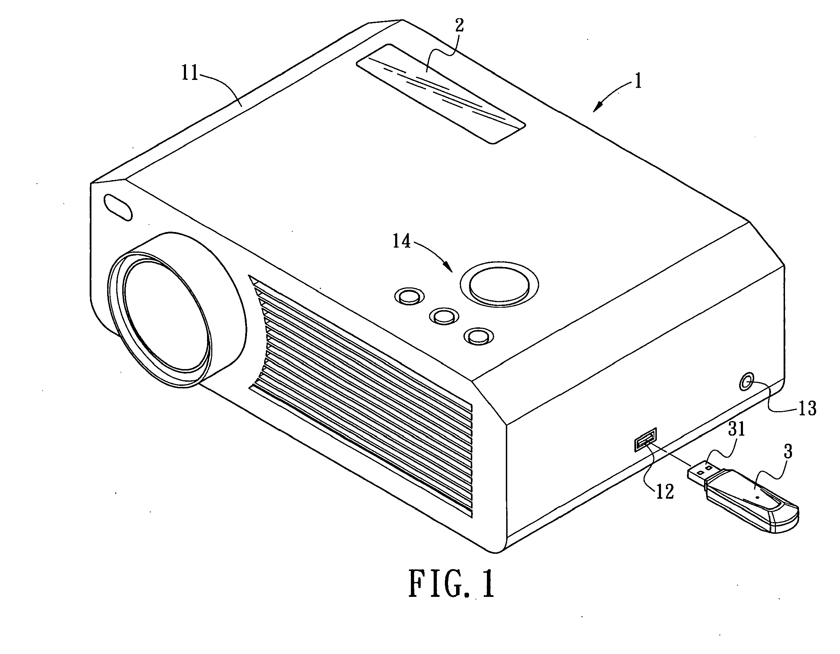

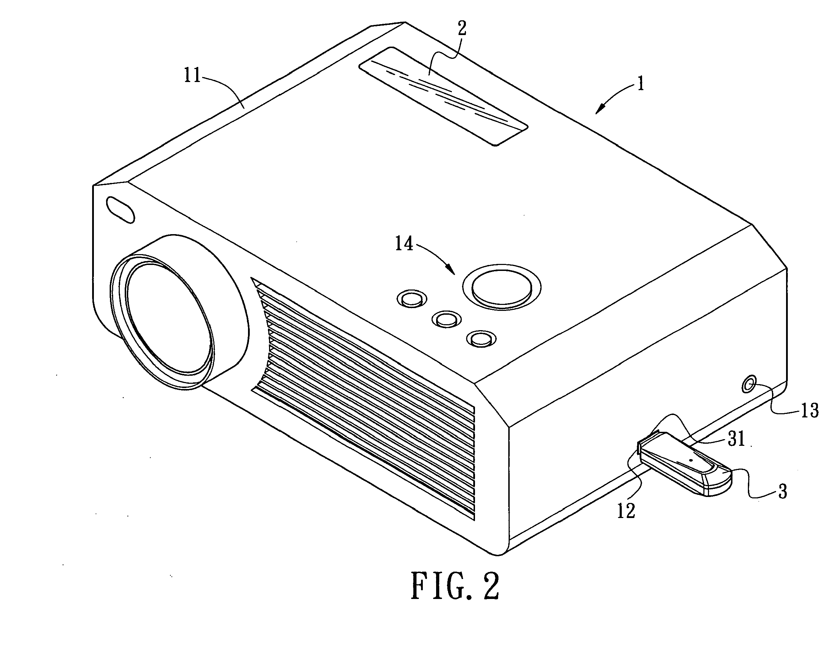

As shown in Figures 1 and 2, a projector having USB OTG functions comprising a projection device 1, a display unit 2 mounted on the projection device 1, and a portable medium 3 connectible to the projection device 1 is provided.

The projection device 1 includes a device body 11 in which a position is predetermined for installing a USB OTG chip (not shown). A USB OTG connection port 12 is also installed in the device body 11. In the embodiment as shown in Figures 1 and 2, the projection device 1 further comprises an earphone inlet 13 for connecting external audio device such as earphone or speaker and a set of control keys 14 for operating the MP3, and digital file, data, transmission of MP3 and access and storage control.

In one embodiment, the control keys may be directly formed on the projection device 1 or as a remote control for controlling operation of the projection device 1. By connecting the portable memory medium, the projection device 1 is operative to serve as a main controller to perform transmission of image file, briefing data, transmission of MP3, control of access and storage at any time and any place, and to serve as a player of MP3 and digital audio/video programs.

The display unit 2 is directly mounted on a predetermined position of the projection device 1 to display the video signal or images of the MP3 when the projection device 1 is connected to the portable memory medium.

The portable memory medium 3 includes a USB connection interface 31 corresponding to the USB OTG connection port 12 of the projection device 1.

The portable memory medium 3 includes various types of memories available on the market such as the walkman, MP3 or walkman having MP3 functions. The portable memory medium 3 can be directly connected to the USB connection interface 31 to the USB OTG connection port 12. Alternatively, the portable memory medium 3 may include a USB memory medium having wireless transmission function or a normal USB memory.

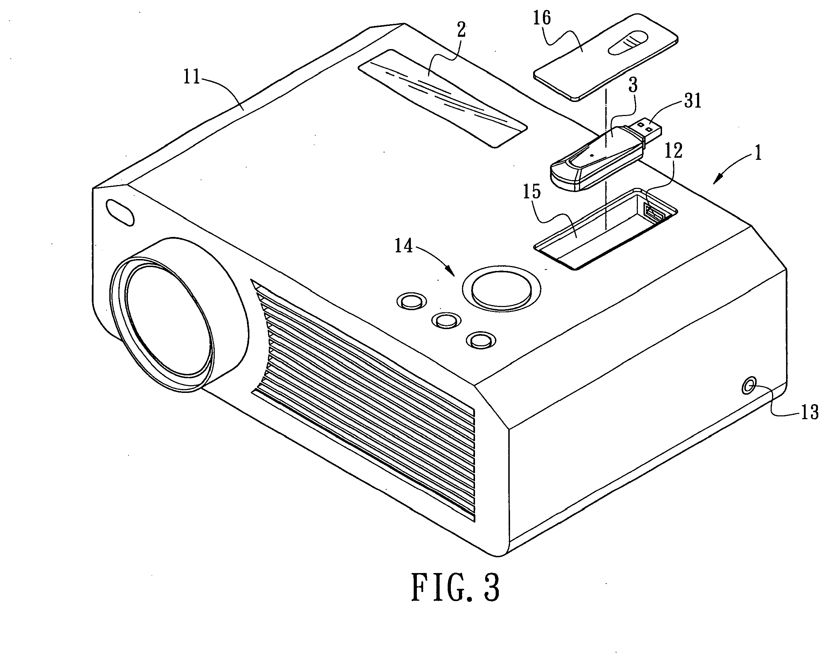

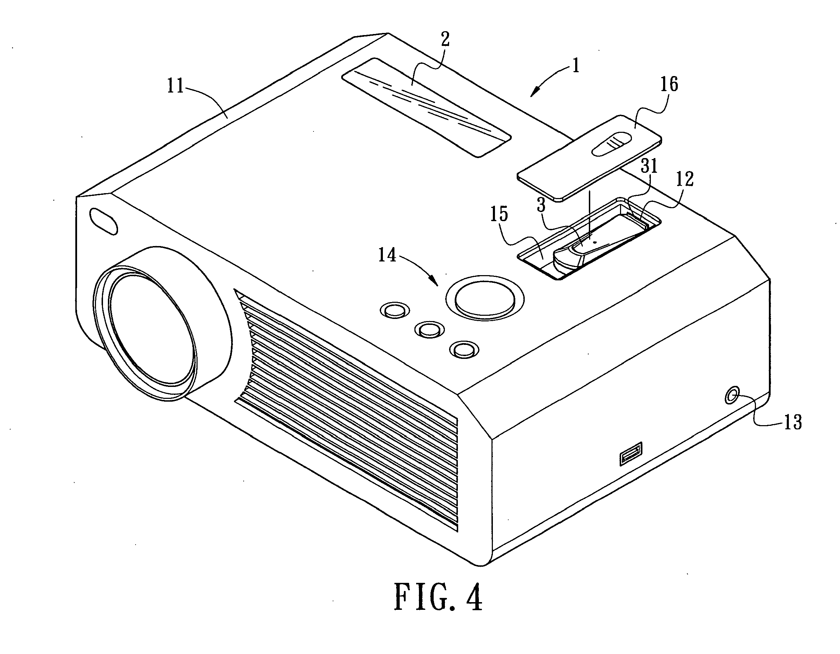

Referring to Figures 3 and 4, in another embodiment, the projector includes the projection device 1, the display unit 2 mounted on the projection device 1, and a portable memory medium 3 connectible to the projection device 1.

The projection device also includes a device body 11. However, different from the above embodiment, the device body includes a recessed slot 15 in which a USB OTG chip (not shown) and a USB OTG connection port 12 can be installed. The slot 15 is covered by a lid 16 after the USB OTG chip is installed.

Similarly, the portable memory medium 3 also includes a USB connection interface 31 that can be accommodated within the slot 15 and connected to the USB OTG connection port 12 within the slot 15 via a USB connection interface 31 thereof as shown in Figure 4.

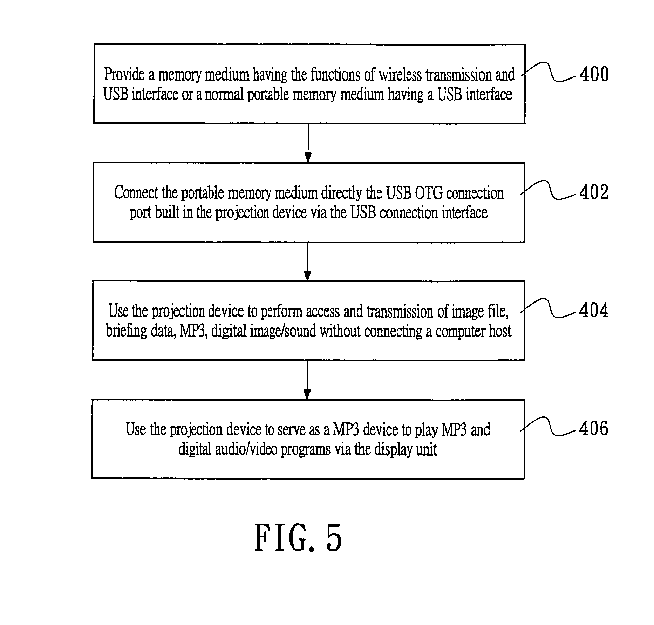

The operation process of the embodiment as shown in Figures 3 and 4 is illustrated in Figure 5. As shown, a memory medium having the functions of wireless transmission and USB interface is provided. Alternatively, a normal portable memory medium 3 having a USB interface is provided in step 400. The portable memory medium 3 is directly connected to the USB OTG connection port 12 built in the projection device 1 via the USB connection interface 31 thereof in step 402. Thereby, the projection device 1 is operative to perform data access, so as to serve as a main controller by using the USB OTG chip. Thereby, the projection device 1 is operative to perform access and transmission of image file, briefing data, MP3, digital image/sound (such as MPEG2, digital voice) in step 404 without connecting a computer host through a conventional USB interface. The projection device 1 is also operative to perform briefing access and projection stored in the portable memory medium 3 through the control of the control key 14 or remote control. Sound or audio signal can also be reproduced via an external earphone or speaker connected to the inserted in the earphone inlet 13. By operating the control keys 14 or remote control device, the projection device 1 is also operative to serve as a MP3 device to play MP3 and digital audio/video programs via the display unit 2 in step 406 directly.

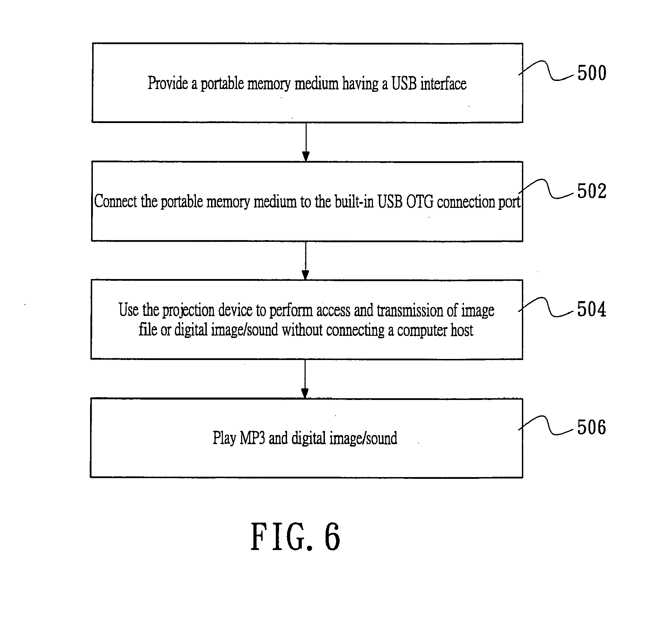

Figure 6 illustrates another operation process of the projector. In this embodiment, a portable memory medium 3 having a USB interface is provided in step 500 and connected to the built-in USB OTG connection port 12 in step 502. The control keys 14 or a remote control is operative to perform real- time access and transmission of MP3 or digital image/sound (such as Mpeg2, digital voice) without connection to a computer host via a conventional USB interface in step 504. Thereby, the projection device 1 is operative to serve as a MP3 device. By the application of an external earphone 13 or speaker connected to the earphone inlet 13, the sound can be reproduced. The MP3 and digital image/sound can also be played in step 506 via the display unit 2.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A projector having a built-in universal serial bus on the go (USB OTG), comprising:
a projection device 1 includes at least one built-in USB OTG chip and one USB OTG connection port;
a display unit 2 mounted on the projection device 1; and
a portable memory medium 3 connectible to the USB OTG connection port 12.

2. The projector of Claim 1, further comprising at least one earphone inlet 13 formed on the device body 11 and one set of control keys 14.

3. The projector of Claim 2, wherein the control keys 14 are formed on the device body 11.

4. The projector of Claim 2, further comprising a set of control keys 14 formed on a remote control.

5. The projector of Claim 1, wherein the portable memory medium 3 includes a USB connection interface 31.

6. The projector of Claim 1, wherein the portable memory medium 3 includes a USB interface operative to perform wireless transmission or hardwire transmission.

7. The projector of Claim 1, wherein the portable memory medium 3 includes a walkman, a MP3 device or a walkman having MP3 function.

8. A projector having a built-in portable USB OTG function, comprising:
a projection device 1 comprising at least one USB OTG chip and one USB OTG connection port 12;
a display unit 2 mounted on the projection device 1; and
a portable memory medium 3 to be received in the projection device 1, the portable memory medium 3 having one end installed with a USB connection interface 31 connectible to the USB OTG connection port 12.

9. The projector of Claim 8, wherein the device body 11 includes a recessed slot 15 for accommodating the USB OTG chip and the USB OTG connection port 12 and a lid 16 to cover the slot 15.

10. A projector having built-in USB OTG functions and operative to perform MP3 function, comprising:
a projection device 1, having at least one built-in USB OTG chip and one USB OTG connection port 12;
a display unit 2 mounted on the projection device 1; and
a walkman having one end installed with a USB connection interface 31 for connecting the USB OTG connection port 12 to allow the projector to serve as a MP3 main controller.

11. The projector of Claim 10, wherein the projection device 1 comprises a slot 15 for installing the built-in USB OTG chip and the USB OTG connection port 12, and the USB connection port of the walkman is connected to the USB OTG connection port 12 to facilitate the projector as a MP3 device operative serve as a main controller to perform MP3, digital image/sound sharing and playing.
